# FASCICULE DE BREVET EUROPEEN

(11) **EP 1 379 004 B1**
(45) Date de publication et mention de la délivrance du brevet: **03.01.2007**
(21) Numéro de dépôt: 03291652.0
(22) Date de dépôt: 03.07.2003
(51) Int. Cl.: H04B 1/12

(54) **Dispositif et procédé de protection contre le bruit électromagnétique**
Vorrichtung und Verfahren zum Schutz gegen elektromagnetisches Rauschen
Electromagnetic noise protection device and method

(30) Priorité: 04.07.2002 FR 0208363
(43) Date de publication de la demande: 07.01.2004
(73) Titulaire: DCN, 75015 Paris (FR)
(72) Inventeur: Borri, Christian, 56270 Ploemeur (FR); Fouillen, Loic, 56700 Hennebont (FR); Rosso, Guy, 56690 Nostang (FR); Sellin, Maurice, 29300 Quimperle (FR)
(74) Mandataire: Habasque, Etienne J. Jean-François

(56) Documents cités:
- EP-A- 0 792 020
- US-A- 4 688 265
- US-A- 4 965 854

## Description

La présente invention concerne notamment le domaine des récepteurs et a plus particulièrement pour objet un dispositif d'interface entre au moins un récepteur et au moins un dispositif d'émission susceptible de perturber le récepteur, cette interface étant apte à permettre la suppression de ladite perturbation.

Le brevet WO9619864 décrit un dispositif apte à supprimer les distorsions engendrées par un amplificateur tout en conservant une bonne dynamique du signal. Ce dispositif décrit un circuit en boucle et comporte notamment :
- des moyens de prélèvement d'un signal S,
- des premiers moyens de traitement du signal S comportant un amplificateur et un premier coupleur,
- des seconds moyens de traitement du signal S comportant des moyens de soustraction du signal issu respectivement d'un second coupleur et du premier coupleur, et des moyens réglables aptes à retarder, déphaser et amplifier le signal issu du soustracteur,
- des moyens de soustraction du signal issu respectivement des premiers et seconds moyens de traitement.

Néanmoins l'inconvénient d'un tel dispositif est de supprimer uniquement le signal parasite créé par l'amplificateur.

On connaît par ailleurs le brevet GB2 262 204 qui décrit un dispositif permettant de supprimer, lors de la réception d'un signal, le brouillage dudit signal par un signal brouilleur dont un échantillon est possible.

Ce dispositif comporte une antenne principale apte à recevoir un signal S comportant un signal parasite Sp et une antenne auxiliaire apte à recevoir le signal Sp :
- des moyens de contrôle du gain et des moyens de changement de fréquence (transformation en une fréquence intermédiaire) appliqués à un premier échantillon du signal parasite (Sp),
- des moyens réglables aptes à, déphaser et amplifier un second échantillon du signal parasite (Sp),
- des moyens de couplage du signal issu des moyens et du signal (S) afin d'obtenir un signal couplé,
- des moyens de contrôle du gain et des moyens de changement de fréquence (transformation en une fréquence intermédiaire) appliqué au signal couplé,
- des moyens de conversion analogique numérique des signaux issus des moyens de réception superhétérodyne,
- des moyens de traitement des signaux numérisés aptes à déterminer la différence de phase et de gain entre ces signaux.

Toutefois, sur un navire comportant des émetteurs impulsionnels électromagnétiques, appelés perturbants dans la suite et des récepteurs, détecteurs, transmetteurs... appelés perturbés dans la suite, les impulsions émises provoquent la plupart du temps, une saturation des moyens de traitement et donc une perturbation de leur fonctionnement pendant une durée beaucoup plus grande que la durée de l'impulsion. Or, un dispositif tel que celui précédemment décrit ne permet pas d'empêcher une telle saturation puisqu'il ne supprime de la réception que le signal émis. Par ailleurs, si deux perturbés sont présents sur un même site, chacun d'eux doit comporter un dispositif tel que précédemment décrit.

Il est également connu par le document EP-A-792020, un circuit antibruit électromagnétique pour un dispositif électrique à protéger.

Le but de l'invention est de pallier ces inconvénients en proposant un dispositif permettant de supprimer les risques de saturation des moyens de traitement des perturbés et pouvant traiter tous les perturbés présents sur un même site, ce même site pouvant par exemple être un navire.

La solution apportée est un dispositif de désensibilisation d'au moins un matériel perturbé contre l'émission de signaux électromagnétiques émis à sa proximité par au moins un appareil perturbant, caractérisé en ce qu'il comporte des moyens d'acquisition d'informations sur les signaux électromagnétiques émis par ledit appareil perturbant, des moyens de traitement des signaux électromagnétiques émis par ledit appareil perturbant, des moyens de génération d'un signal de désensibilisation du matériel perturbé du type créneau, des moyens de réglage ou de programmation de la durée dudit créneau et de son retard ou de son allongement lorsque ledit appareil perturbant émet un créneau enveloppe, et des moyens d'application de ce signal de désensibilisation de type créneau audit matériel perturbé pour le désensibiliser.

Ainsi la transmission au matériel dudit signal de type créneau permet de supprimer, totalement ou partiellement, sa réception pendant la durée du créneau, permettant ainsi d'annihiler toute influence de l'émission d'un perturbant sur la réception du matériel.

Selon une caractéristique particulière, un dispositif selon l'invention comporte des moyens de programmation d'une matrice de distribution pour déterminer l'influence du ou de chaque appareil perturbant sur le ou sur chaque matériel perturbé.

Selon une caractéristique particulière, un dispositif selon l'invention comporte des moyens d'acquisition d'un signal de synchronisation des signaux électromagnétiques émis ou d'un créneau constituant une enveloppe du signal électromagnétiques émis par le perturbant.

Selon une caractéristique particulière, un dispositif selon l'invention comporte des moyens d'acquisition d'un signal de comportement IR de l'appareil perturbant, ce signal consistant en au moins l'une des informations suivantes : la largeur d'impulsion Ll, la charge, le silence, le retard RE et le fonctionnement ou non en puissance réduite.

Selon une caractéristique particulière, un dispositif selon l'invention comporte des moyens de génération d'un créneau de désensibilisation dont la durée et le retard sont fonction dudit signal de comportement et du signal de synchronisation des signaux émis ou du créneau constituant une enveloppe du signal émis par le perturbant.

Selon une caractéristique particulière, un dispositif selon l'invention comporte des moyens aptes à désensibiliser au moins deux matériels contre l'émission de signaux électromagnétiques émis à sa proximité par au moins un appareil, ou au moins un matériel contre l'émission de signaux électromagnétique émis à sa proximité par au moins deux appareils.

Selon une caractéristique particulière, un dispositif selon l'invention comporte des moyens de distribution des créneaux générés en fonction de ladite matrice de répartition.

Selon une autre caractéristique, le ou les appareils perturbants comportent une direction d'émission variable et un dispositif selon l'invention comporte alors des moyens d'acquisition de la direction de chaque émission dudit appareil perturbant et des moyens de programmation de la durée dudit créneau ou de son allongement lorsque ledit appareil perturbant émet un créneau enveloppe, en fonction de la direction d'émission de l'appareil perturbant.

Selon une caractéristique additionnelle, il comporte des moyens d'acquisition du site et du gisement de l'émission électromagnétique de l'appareil ou de données permettant la détermination de ces valeurs.

Selon une autre caractéristique, le dispositif, le ou les matériels et le ou les appareils sont disposés sur un navire et le dispositif comporte des moyens d'acquisition de l'élévation, de l'azimut et du cap du navire.

L'invention concerne aussi un procédé de désensibilisation d'au moins un matériel perturbé contre l'émission de signaux électromagnétiques émis à sa proximité par au moins un appareil perturbant, connaissant le moment où chaque signal d'émission est émis, caractérisé en ce qu'il consiste à appliquer un signal de désensibilisation audit matériel perturbé pendant lequel la réception est supprimée partiellement ou totalement, signal de désensibilisation dont la durée et le retard ont été déterminés au préalable par des moyens de réglage ou de programmation lorsque l'appareil perturbant émet un créneau enveloppe, ladite durée du signal de désensibilisation étant différente de celle du signal électromagnétique d'émission.

Lorsque ledit appareil perturbant est apte à émettre successivement dans plusieurs directions, ladite durée du signal de désensibilisation est fonction de la direction d'émission de l'appareil perturbant.

Un dispositif selon l'invention présente de nombreux avantages par rapport à l'état de la technique. En effet, il permet de prendre en compte la réalité du signal perçu par le perturbé :
- ce signal peut être plus important que le signal émis par le perturbant à cause des réflexions dues à l'environnement, notamment lorsque les perturbants et les perturbés sont à bord d'un navire,
- la durée du signal perçu par le perturbé peut être variable voire nulle, notamment à cause de la direction d'émission du perturbant et/ou de la configuration de l'environnement, un dispositif à haut pouvoir absorbant pouvant par exemple être interposée entre le perturbant et le perturbé.

Ces objets, caractéristiques et avantages, ainsi que d'autres de la présente invention seront exposés en détail dans la description suivante d'un mode de réalisation particulier fait à titre non-limitatif et au regard des figures annexées parmi lesquelles :
- la figure 1 présente le positionnement d'un dispositif selon l'invention dans un environnement type,
- la figure 2 montre un schéma général d'un dispositif selon le mode de réalisation explicité,
- la figure 3 expose un schéma de la carte gestionnaire selon ledit mode,
- la figure 4 expose un schéma d'une carte élaboration selon ledit mode, la figure 5 montre un schéma des moyens de génération de
- la figure 5 montre un schéma des moyens de génération de créneaux,
- la figure 6 montre un schéma plus détaillé de ces moyens de génération de créneaux,
- les figures 7a et 7b exposent le fonctionnement de moyens de stockage de données contenues dans ces moyens de génération de signaux,
- la figure 8 montre un schéma des moyens de test d'une carte élaboration,
- les figures 9 et 10 présentent des exemples de matrice de répartition.

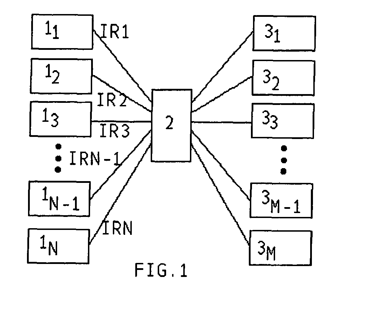

Comme le montre la figure1, l'invention est constituée par une interface 2 reliée d'une part à des moyens d'émission 1₁ à 1ₙ d'un rayonnement électromagnétique et d'autre part à des moyens de réception 3₁ à 3ₘ d'un rayonnement électromagnétique.

Dans cet exemple de réalisation, tous ces éléments sont disposés à bord d'un même navire sur lequel une information de cap, appelée CAP, est disponible.

Les moyens d'émission 1₁ à 1ₙ d'un rayonnement électromagnétique sont constitués par des radars à antenne mobile à savoir tournante mécaniquement ou électroniquement et pour lesquels une information d'azimut de la direction d'émission est disponible, ainsi que par des radars à antenne pointable dont une information d'élévation et de gisement de pointage sont disponibles.

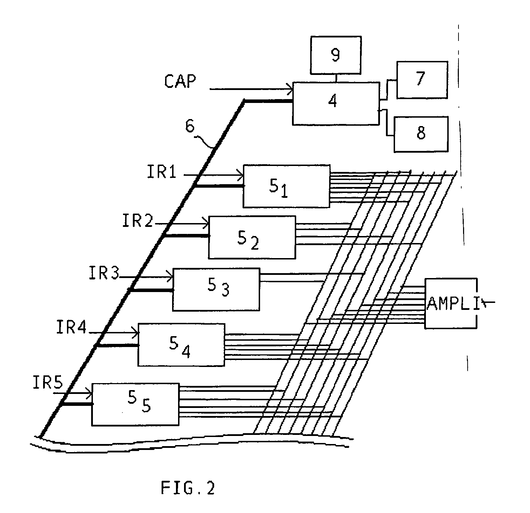

La figure 2 présente les principaux éléments constitutifs de l'interface selon ce mode de réalisation.

Cette interface 2 comporte un ensemble de cartes électroniques 4 et 5₁ à 5ₙ appelées respectivement carte gestionnaire 4 et cartes élaboration 5₁ à 5ₙ dans la suite. Seulement 5 cartes élaboration sont présentées sur cette figure.

Ces cartes sont reliées entre-elles par un bus interabonné 6 et un fond de panier VME.

La carte gestionnaire 4 est connectée à une console tactile 7 et peut aussi être connectée par exemple à un micro-ordinateur 8 via une liaison de type RS232. elle est en outre connectée à un boîtier de commande 9 avec les fonctionnalités suivantes :
- MARCHE ou ARRET de l'interface 2,
- Sélection du mode de fonctionnement: MAINTENANCE ou OPERATIONNEL.

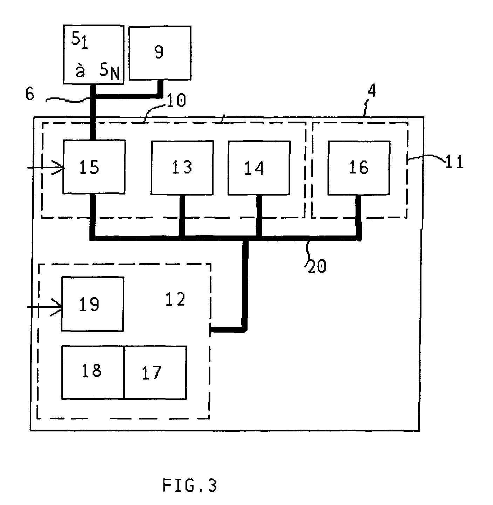

Comme le montre la figure 3, cette carte comporte une carte mère 10 et deux cartes filles 11 et 12.

La carte mère 10 comporte un microprocesseur 13 auquel sont associés deux registres 14 ainsi que des moyens 15 d'interfaçage d'acquisition de données, cet ensemble constituant des moyens d'acquisition de données.

Le microprocesseur 13 utilisé dans cet exemple de réalisation est un Motorola 68000. Les deux registres 14, (registre 1 et registre 3) en écriture seule, fournissent les informations nécessaires au fonctionnement interne de la carte.

Deux autres registres (registre 2 et registre 4) en lecture seule situés sur les cartes interface élaboration et interface gestionnaire permettent la lecture par le microprocesseur 13 d'un ensemble de données cablées (numéro carte fille, numéro abonné...) ainsi que de l'information de mode de fonctionnement provenant du boitier de commande (opérationnel ou maintenance).

La carte mère 10 comporte aussi des moyens connus et non représentés, de synchronisation et d'horlogerie de la carte.

Les moyens 15 d'interfaçage d'acquisition de données sont constitués par deux contrôleurs de communication et permettent l'acquisition par le microprocesseur 13 de la valeur, appelée CAP, du cap suivi par le navire, du mode de fonctionnement, en l'occurrence maintenance ou opérationnel ainsi que de données provenant de ladite console tactile 7 ou du micro-ordinateur 8.

La carte fille 11 est une carte fille mémoire comportant 512 koctets de mémoire PROM comportant le binaire de l'application et de 768 koctets de mémoire RAM statiques pour le stockage des données.

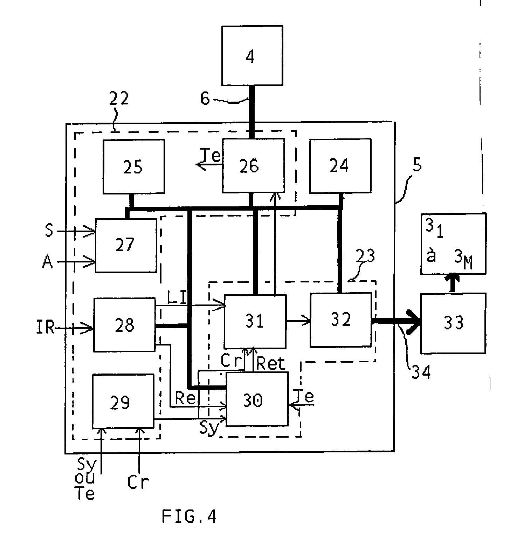

La carte fille 12 est une carte fille appelée d'interfaçage. Elle comporte deux jeux de deux barrettes de mémoire FLASH 17 et 18 dont l'un est destiné à stocker un premier jeu de paramètres de fonctionnement et l'autre un deuxième jeu différent, si l'on décide de les différencier selon des critères opérationnels chacun d'eux pouvant être choisi, au gré de l'opérateur, pour le fonctionnement de l'interface en mode opérationnel. Cependant, en procédure générale, le premier jeu comporte les paramètres de fonctionnement en vigueur à l'issue de la phase de réglage tandis que le deuxième jeu comporte les mêmes paramètres mais transférés du premier jeu dans le second jeu par action de l'opérateur (l'existence de jeux différents en phase de réglage facilite la détermination du réglage nominal). La figure 4 expose un schéma d'une carte élaboration selon ledit mode de réalisation.

Chaque carte élaboration 5₁ à 5ₙ appelée de façon générique 5 dans la suite, comporte des moyens 22 d'acquisition et de traitement de données ainsi que des moyens 23 de génération de signaux aptes à être transmis sélectivement aux perturbés 3₁ à 3ₙ et des moyens 24 de stockage d'informations. Ces éléments sont connectés entre eux par un bus 68000.

Les moyens 22 d'acquisition et de traitement de données comportent un microprocesseur 25 de type Motorola 68000 et des premiers, seconds, troisièmes et quatrièmes moyens d'adaptation de signaux, respectivement 26, 27, 28 et 29.

Les premiers moyens d'adaptation 26 sont des moyens d'interfaçage d'acquisition de données constitués par deux contrôleurs de communication et permettent notamment l'acquisition par le microprocesseur 25 de données provenant de la carte gestionnaire 4.

Les seconds moyens d'adaptation 27 sont aptes à adapter les informations de site et d'azimut, respectivement S et A, fournis par les perturbants 1₁ à 1ₙ.

Ces moyens sont constitués par deux composants EPLD utilisés pour la conversion de signaux à modulation de largeur d'impulsion en des signaux TTL.

Les troisièmes moyens d'adaptation 28 sont aptes à adapter les informations de fonctionnement IR du perturbant auquel est associée la carte élaboration 5. Ces informations sont la largeur d'impulsion Ll, la charge, le silence, le retard RE et le fonctionnement en puissance réduite ou non. Ces signaux sont tout d'abord mis à niveau dans un composant de type **Level Shift** afin d'obtenir un signal TTL puis exploités dans un composant EPLD. Ce composant EPLD permet le transcodage des signaux afin de pouvoir les exploiter au niveau du microprocesseur. En effet, les informations qui arrivent sous forme de signaux peuvent être de nature différente en fonction du type de perturbant qui les génère. On peut ainsi avoir, pour une même fonction, un niveau logique 0 pour un perturbant et un niveau logique 1 pour un autre perturbant.

Aussi, à partir du numéro d'abonné affecté à chacun des perturbants, l'EPLD, dit de transcodage, oriente les diverses entrées vers une table de transcodage spécifique, afin d'uniformiser les niveaux logiques pour une même fonction. Cet EPLD de transcodage gère en outre la nature des entrées, à savoir différentielles ou non, d'après le numéro d'abonné. Enfin, lorsqu'une configuration des signaux lui est inconnue, l'EPLD positionne les sorties pour avoir un fonctionnement en mode défaut, de même qu'il le signale en éteignant une LED sur la carte.

Les quatrièmes moyens d'adaptation 29 sont aptes à transformer un signal de synchronisation Sy ou un créneau provenant d'un perturbant en signal TTL. Ils sont constitués par deux trigger de SCHMITT. Les signaux ainsi remis à niveau vont dans les moyens 23 de génération de signaux.

Ces moyens 23 de générations de signaux comportent d'une part des moyens 30 de génération d'un retard ou d'un allongement d'un signal et d'autre part des moyens 31, 32 de génération de créneaux.

Les moyens 30 de génération d'un retard ou d'un allongement d'un signal sont constitués par un composant EPLD qui reçoit les informations de :
- type de signal émis par le perturbant à savoir SYNCRHO (Sy) ou CRENEAU (Cr), le premier comprenant un signal de synchronisation indiquant que la génération, par le perturbant, d'une impulsion électromagnétique va avoir lieu, tandis que le second comprend un créneau qui constitue une enveloppe du train d'impulsion émis par le perturbant: c'est le cas par exemple pour les signaux du type IFF dans lequel des impulsions électromagnétiques sont émises sensiblement toutes les µs : aussi, au lieu d'envoyer des signaux de synchronisation quasiment à chaque microseconde, un créneau, constituant l'enveloppe de l'émission, est généré ;
- temps de retard : caractérisé par le retard avec lequel l'impulsion électromagnétique est émise après le signal de synchronisation, les temps de transit sur les liaisons entre 1 et 2, 2 et 3, les temps de traitement de 2 et de 3 ou le temps d'allongement du créneau afin de prendre en compte les réflexions du signal émis par le perturbant ; les valeurs de ces temps sont programmées par l'opérateur tout comme type de signal émis par le perturbant ;
- fonctionnement en mode test de la carte.

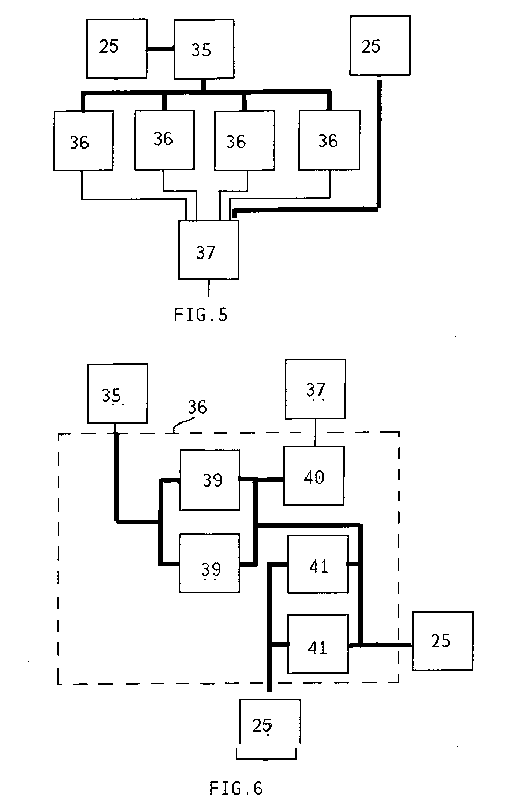

Les moyens 31 de génération de créneaux, montrés et détaillés sur les figures 5 et 6, sont constitués par un premier composant EPLD 35 connecté par un bus unidirectionnel à quatre ensembles identiques 36 de génération d'une impulsion, eux-mêmes connectés à des moyens 37 de répartition des impulsions générées par lesdits quatre ensembles identiques 36.

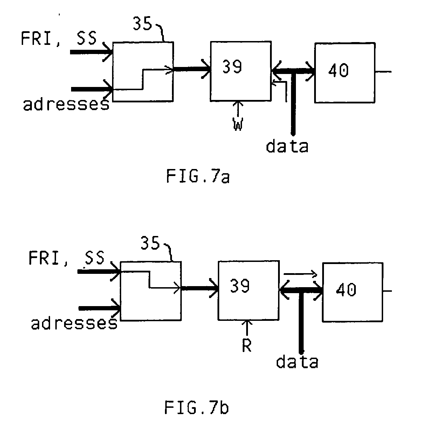

Chacun de ces derniers comporte des moyens 39 de stockage de données, de type SRAM, un générateur d'impulsions 40 constitué par un deuxième composant EPLD et deux drivers bidirectionnels 41 reliés au bus de données du microprocesseur 68000. le premier composant EPLD 35 reçoit deux types d'informations, d'une part chacune des durées Ll1, Ll2, Ll3 et L4 de l'impulsion générée par chacun des deuxièmes composants EPLD 40, le secteur SS dans lequel se trouve la direction d'émission de la prochaine impulsion générée par le perturbant ainsi que la valeur LI de la largeur des impulsions d'émission, lesdites durées ayant été au préalable programmées et validées par un opérateur lors d'une phase de réglage, et d'autre part les bus adresses provenant du microprocesseur 25. Comme montré sur la figure 7a, lorsque les moyens 39 de stockage d'informations sont en mode écriture W, la première EPLD 35 transmet, aux moyens de stockage, des adresses provenant du bus adresses relié au microprocesseur tandis que sont chargées simultanément les informations de largeurs d'impulsion issues de l'un des deux jeux de barrettes de mémoire FLASH de la carte fille d'interfaçage 12 de la carte gestionnaire 4.

Comme montré sur la figure 7b, lorsque les moyens 39 de stockage d'informations sont en mode lecture R, la première EPLD 35 transmet, aux moyens de stockage, le secteur dans lequel se trouve la direction d'émission de la prochaine impulsion générée par le perturbant ainsi que la valeur Ll de la largeur des impulsions d'émission.

Les registres 14 situés sur la carte mère (Registre 1 et Registre 3) permettent de générer des signaux de séquencement et de validation des premier et second EPLD 35 et 40 et des moyens de stockage d'informations 39.

Lesdits moyens 37, matrice de distribution, en fonction des perturbants, des impulsions générées par lesdits quatre ensembles identiques 36 est constitué par un composant EPLD qui reçoit chacune des quatre impulsions générées par les moyens 36, ainsi que les données issues du microprocesseur 25, permettant de la programmer. Cette matrice de distribution est constituée lors d'une phase d'essai. Pour chaque perturbant, l'un après l'autre, et pour l'ensemble des perturbés, on fait passer successivement chaque émetteur en émission dans ses différents modes d'émission et l'on évalue la perception de chacun des perturbés, et ce, pour différentes valeurs d'élévation et/ou de gisement de l'émission électromagnétique. Cette matrice est programmée par un opérateur à l'aide de la console tactile 7 ou du PC et ces informations sont enregistrées dans les moyens de stockage d'information de la carte fille mémoire de la carte gestionnaire.

Si ces essais sont faits par exemple avec, à chaque fois, une variation d'angle d'élévation ou de gisement de 15° et ce de 0 à 360°, on peut alors définir 24 secteurs, et pour chacun d'eux on déterminera, pour chaque perturbé, si l'émission correspondante du perturbant a une influence ou pas. Ensuite, pour chacun des secteurs d'émission ayant une influence sur l'un au moins des perturbants, et préférablement successivement pour chacun des perturbés, on règle la valeur de la durée des créneaux pour l'un des ensembles 36 (non car les temps qu'il compense sont indépendants des secteurs) lorsque le signal reçu est de type SYNCRO, ou l'allongement du créneau lorsqu'il est de type CRENEAU. Le retard indépendant des secteurs est également réglé. Ces informations sont réglables de 0 à 3276 µs pour la largeur d'impulsion et de 0 à 204 µs pour le retard par pas de 50ns.

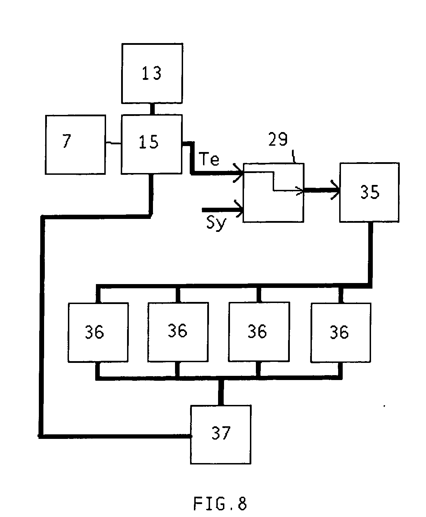

On détermine alors, par essais successifs, préférablement par une méthode de type dichotomie, les valeurs minimales de ces réglages qui permettent d'annihiler la réponse du perturbé à l'émission du perturbant puis ces valeurs sont validées par l'opérateur et transmises automatiquement aux moyens de stockage de type FLASH 17, via le microprocesseur 13. Cette étape est réalisée pour chaque valeur Ll possible de la largeur des impulsions d'émission du perturbant. Chaque carte élaboration est capable de traiter au maximum 4 Ll par perturbant, plusieurs cartes élaboration pouvant être mises en parallèle si nécessaire. Comme montré sur la figure 8, chaque carte élaboration peut être testée. Pour cela l'opérateur appuie sur une touche TEST présente dans le menu de la console tactile 7 ou d'un PC. Une interruption du microprocesseur 13 de la carte gestionnaire 4 est alors générée et l'un des contrôleurs de communication 15 génère un signal de synchronisation Te, similaire au signal Sy, qui est transmis aux moyens 30 de génération d'un retard, dans lequel il est retardé puis transmis dans chacun des ensembles de génération d'impulsion 36 puis dans les moyens de répartition 37 et enfin à l'autre contrôleur de communication 15 dans lequel un timer mesure la durée de l'impulsion ; lorsque cette durée est identique à celle du signal de synchronisation Te, le fonctionnement de la carte est validé et la génération de signaux à partir des signaux issus des perturbants reprend.

Le fonctionnement d'un dispositif selon ce mode de réalisation consiste donc dans une première étape, et pour chaque mode de fonctionnement de chacun des perturbants, à déterminer pour chaque secteur d'émission défini au préalable, de chacun des perturbants, les valeurs de réglage du retard et de la durée minimale du créneau ou la durée minimale de l'allongement du créneau, qui, lorsqu'elles sont transmises sélectivement aux perturbés pour supprimer, totalement ou partiellement, la réception pendant la durée du créneau, permettent d'annihiler toute influence de l'émission d'un perturbant sur la réception d'un perturbé. Comme expliqué précédemment, ces valeurs sont, dans cet exemple de réalisation, réglées par l'opérateur et validée par lui pour être stockées en mémoire lorsque l'objectif d'annihilation est atteint.

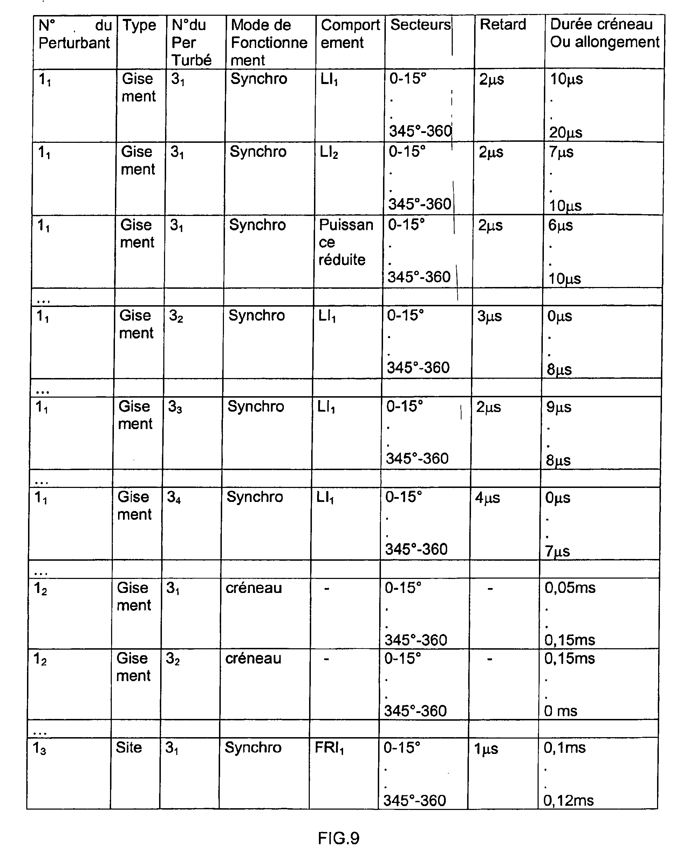

Lorsque la ou les couples de valeurs ont été validés et donc enregistrés pour chacun des secteurs prédéfinis et des couples perturbant-perturbé, et en fonction du mode de fonctionnement du perturbé (Ll, puissance réduite, SYNCHRO, CRENEAU), on obtient alors l'équivalent d'une matrice de distribution du type de celle présentée à la figure 9.

Le dispositif est alors prêt à fonctionner. Comme indiqué précédemment, chaque carte élaboration 5₁ ou plus, correspond à un perturbant et le mode de fonctionnement de ce dernier, à savoir Synchro ou Créneau, ainsi que le type d'antenne, à savoir soit tournante pour laquelle une information de gisement ou d'azimut est disponible ou soit de pointage pour laquelle des informations d'élévation et de gisement ou d'azimut sont disponibles, a été programmée. Aussi, comme dans le cas du perturbant 1₁ de la figure 9, ce dernier émet d'une part les informations lR à savoir la largeur d'impulsion Ll la charge, le silence, le retard RET et le fonctionnement en puissance réduite ou non et d'autre part un signal de synchronisation avant toute émission électromagnétique et le gisement auquel aura lieu l'émission.

Lorsqu'un signal de charge ou de silence provient du perturbant, le dispositif selon l'invention ne génère aucun créneau car dans le premier cas le signal signifie que le perturbant est en maintenance et qu'il émet sur une charge tandis que dans le deuxième cas, l'émission électromagnétique est arrêtée.

Dans les autres cas, les moyens 23 de génération de signaux génèrent 1 à 4 créneaux destinés à être répartis vers 1 à 4 perturbés. Pour cela, d'une part la valeur de la largeur des impulsions d'émission du perturbant est reçue par l'EPLD de transcodage et enregistrée dans un registre tandis que celle de l'azimut et le cas échéant de l'élévation sont reçues par les moyens d'adaptation 27 et le microprocesseur 25 détermine alors, si nécessaire le gisement tel que gis-az-cap, ainsi que le secteur correspondant au gisement ou à l'élévation. Ces valeurs de secteur et de largeur des impulsions, de silence ou de charge et de puissance réduite sont ensuite transmises aux moyens 36 de génération de signaux. Parallèlement, le signal de synchronisation est retardé de la somme de la valeur RE provenant du perturbant et de celle ayant fait l'objet d'un réglage et figurant dans le tableau de la figure 9. A l'issue de ce retard les moyens 30 envoient aux moyens 29 de génération d'un créneau un signal apte à déclencher ladite génération. Ainsi dans l'exemple de la figure 9, si nous supposons que la largeur d'impulsion concernée est la Llᵢ et que le secteur d'émission est 0-15°, la durée du créneau généré sera de 10 µs pour le premier ensemble 36, 0 µs pour le second ensemble 36, 9 µs pour le troisième ensemble 36 et 0 µs pour le quatrième, ces signaux étant respectivement envoyés vers les perturbés 3₁, 3₂, 3₃ et 3₄. A la réception du créneau correspondant, la réception du perturbé est partiellement, par exemple sur une bande de fréquence étroite, ou totalement supprimée de façon à supprimer toute influence du perturbant sur le perturbé.

Il est bien évident que de nombreuses modifications peuvent être apportés à l'exemple de réalisation décrit sans sortir du cadre de l'invention.

Ainsi on peut prévoir plus de moyens de génération de signaux que de perturbés (cas des émetteurs à plus de 4Ll).

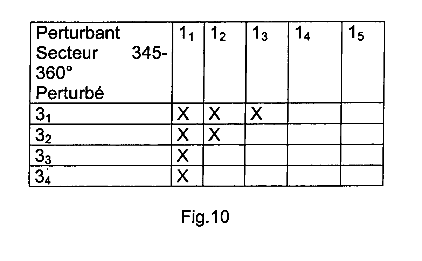

La matrice de répartition peut être réalisée tout secteur confondu c'est-à-dire prenant en compte l'influence d'un perturbant sur un perturbé dès qu'un secteur au moins d'émission engendre une perturbation du perturbé. On obtient alors une matrice de répartition du type de celle décrite sur la figure 10.

Par ailleurs, un dispositif selon l'invention peut être utilisé pour désensibiliser fréquentiellement un matériel perturbé afin de l'affranchir, par filtrage dans les bandes de fréquences ad hoc, des gênes apportées par les matériels de transmission par satellite.

## Revendications

1. Dispositif de désensibilisation d'au moins un matériel perturbé contre l'émission de signaux électromagnétiques émis à sa proximité par au moins un appareil perturbant, le dispositif comportant :
- des moyens (13, 14, 15, 22) d'acquisition d'informations sur les signaux électromagnétiques émis par ledit appareil perturbant,
- des moyens de traitement (13, 22) de ces signaux électromagnétiques émis par ledit appareil perturbant,
- des moyens (23) de génération d'un signal de désensibilisation du matériel perturbé de type créneau, **caractérisé en ce qu'**il comporte :
a) des moyens de constitution, lors d'une phase d'essai, d'une matrice de distribution comprenant pour chaque mode de fonctionnement de chacun des appareils perturbants, les valeurs de la durée dudit créneau et de son retard ou de son allongement lorsque chaque appareil perturbant émet un créneau enveloppe, les moyens de constitution comprenant :
- des moyens de passage successif de chaque appareil perturbant en émission dans ces différents modes d'émission ;
- des moyens d'évaluation de la perception de chaque émission par chaque matériel perturbé ;
- des moyens de programmation des valeurs de la durée dudit créneau et de son retard ou de son allongement pour supprimer totalement ou partiellement la réception pendant la durée du créneau et pour permettre d'annihiler toute influence de l'émission d'un appareil perturbant sur la réception d'un matériel perturbé ; et
- des moyens de mémorisation des valeurs de la durée dudit créneau et de son retard ou de son allongement pour chaque couple d'appareil perturbant/matériel perturbé,
b) des moyens (7, 8, 13, 14, 15) de réglage ou de programmation de la durée dudit créneau et de son retard ou de son allongement lorsque ledit appareil perturbant émet un créneau enveloppe ; et
c) des moyens d'application de ce signal de désensibilisation de type créneau audit matériel perturbé pour le désensibiliser.

2. Dispositif selon la revendication 1, **caractérisé en ce qu'**il comporte des moyens d'acquisition d'un signal de synchronisation des signaux électromagnétiques émis ou d'un créneau constituant une enveloppe du signal électromagnétique émis par l'appareil perturbant.

3. Dispositif selon l'une quelconque des revendications 1 et 2, **caractérisé en ce qu'**il comporte des moyens d'acquisition d'un signal de comportement de l'appareil perturbant, ce signal consistant en au moins l'une des informations suivantes :
- la largeur d'impulsion électromagnétique émise par l'appareil perturbant pour des signaux électromagnétiques émis comprenant un signal de synchronisation indiquant la génération par l'appareil perturbant d'une impulsion électromagnétique,
- la charge provenant de l'appareil perturbant, la charge signifiant que l'appareil perturbant émet un signal électromagnétique,
- le silence provenant de l'appareil perturbant, le silence signifiant que l'appareil perturbant n'émet pas de signal électromagnétique, et
- le fonctionnement ou non en puissance réduite de l'appareil perturbant.

4. Dispositif selon la revendication 2, et la revendication 3, **caractérisé en ce qu'**il comporte des moyens de génération d'un créneau de désensibilisation dont la durée et le retard sont fonction dudit signal de comportement et du signal de synchronisation des signaux émis ou du créneau constituant une enveloppe du signal émis par l'appareil perturbant.

5. Dispositif selon l'une quelconque des revendications 1 à 4, **caractérisé en ce qu'**il comporte des moyens aptes à désensibiliser au moins deux matériels perturbés contre l'émission de signaux électromagnétiques émis à sa proximité par au moins un appareil perturbant, ou au moins un matériel perturbé contre l'émission de signaux électromagnétiques émis à sa proximité par au moins deux appareils perturbants.

6. Dispositif selon la revendication 5, **caractérisé en ce qu'**il comporte des moyens de distribution des créneaux générés en fonction de ladite matrice de distribution.

7. Dispositif selon l'une quelconque des revendications 1 à 6, **caractérisé en ce qu'**il comporte des moyens d'acquisition de la direction de chaque émission dudit appareil perturbant présentant une direction d'émission variable et des moyens de programmation de la durée dudit créneau et de son retard ou de son allongement lorsque ledit appareil perturbant émet un créneau enveloppe, en fonction de la direction d'émission de l'appareil perturbant.

8. Dispositif selon l'une quelconque des revendications 1 à 6, **caractérisé en ce qu'**il comporte des moyens d'acquisition de l'élévation et du gisement de l'émission électromagnétique ou de données permettant la détermination de ces valeurs.

9. Dispositif selon l'une quelconque des revendications 1 à 8, **caractérisé en ce que** le dispositif, le ou les matériels perturbés et le ou les appareils perturbants sont disposés sur un navire et le dispositif comporte des moyens d'acquisition de l'azimut de la direction d'émission et du cap du navire.

10. Procédé de désensibilisation d'au moins un matériel perturbé contre l'émission de signaux électromagnétiques émis à sa proximité par au moins un appareil perturbant, connaissant le moment où chaque signal d'émission est émis, **caractérisé en ce qu'**il comprend les étapes suivantes :
a) constitution, lors d'une phase d'essai, d'une matrice de distribution comprenant pour chaque mode de fonctionnement de chacun des appareils perturbants, les valeurs de la durée dudit créneau et de son retard ou de son allongement lorsque chaque appareil perturbant émet un créneau enveloppe, l'étape de constitution comprenant les étapes suivantes :
- passage successif de chaque appareil perturbant en émission dans ces différents modes d'émission ;
- évaluation de la perception de chaque émission par chaque matériel perturbé ;
- programmation des valeurs de la durée dudit créneau et de son retard ou de son allongement pour supprimer totalement ou partiellement la réception pendant la durée du créneau et pour permettre d'annihiler toute influence de l'émission d'un appareil perturbant sur la réception d'un matériel perturbé ; et
- mémorisation des valeurs de la durée dudit créneau et de son retard ou de son allongement pour chaque couple d'appareil perturbant/matériel perturbé,
b) détermination préalable d'une durée et d'un retard par des moyens de réglage ou de programmation lorsque l'appareil perturbant émet un créneau enveloppe, et
c) application d'un signal de désensibilisation audit matériel perturbé pendant lequel la réception est supprimée partiellement ou totalement, ladite durée du signal de désensibilisation étant différente de celle du signal électromagnétique d'émission.

11. Procédé selon la revendication 10, **caractérisé en ce que** ladite durée du signal de désensibilisation est fonction de la direction d'émission de l'appareil perturbant adapté pour émettre successivement dans plusieurs directions.

## Claims

1. Device for the desensitisation of at least one piece of equipment subject to interference against the transmission of electromagnetic signals transmitted in proximity thereto by at least one interfering instrument, the device comprising:
- means (13, 14, 15, 22) for the acquisition of data about the electromagnetic signals transmitted by said interfering instrument,
- means for processing (13, 22) these electromagnetic signals transmitted by said interfering instrument,
- means (23) for generating a signal for the desensitisation of the equipment subject to interference of the pulse type, **characterised in that** it comprises:
a) means for the constitution, during a test phase, of a distribution matrix comprising, for each operating mode of each of the interfering instruments, the values of the length of said pulse and delay thereof or lengthening thereof when each interfering instrument transmits an envelope pulse, the means for constitution comprising:
- means for putting each interfering instrument in transmission successively into these different transmission modes;
- means for evaluating the perception of each transmission by each piece of equipment subject to interference;
- means for programming the values of the length of said pulse and delay thereof or lengthening thereof in order to eliminate reception fully or in part during the length of the pulse and to allow all influence of the transmission of an interfering instrument on the reception of a piece of equipment subject to interference to be annihilated; and
- means for storing values of the length of said pulse and delay thereof or lengthening thereof for each interfering instrument/piece of equipment subject to interference pair,
b) means (7, 8, 13, 14, 15) for adjusting or programming the length of said pulse and delay thereof or lengthening thereof when said interfering instrument transmits an envelope pulse; and
c) means for applying this pulse desensitising signal to the equipment subject to interference in order to desensitise it.

2. Device according to claim 1, **characterised in that** it comprises means for the acquisition of a signal for synchronising the electromagnetic signals transmitted or of a pulse constituting an envelope of the electromagnetic signal transmitted by the interfering instrument.

3. Device according to any one of claims 1 and 2, **characterised in that** it comprises means for the acquisition of a behaviour signal of the interfering instrument, the signal consisting of at least one of the following pieces of information:
- the width of the electromagnetic pulse transmitted by the interfering instrument in respect of transmitted electromagnetic signals that include a synchronisation signal indicating the generation by the interfering instrument of an electromagnetic pulse,
- the charge coming from the interfering instrument, the charge signifying that the interfering instrument is transmitting an electromagnetic signal,
- the silence coming from the interfering instrument, the silence signifying that the interfering instrument is not transmitting an electromagnetic signal, and
- the operation or non-operation at reduced power of the interfering instrument.

4. Device according to claim 2, and claim 3, **characterised in that** it comprises means for the generation of a desensitising pulse, the length and delay of which are a function of said behaviour signal and of the signal for the synchronisation of the signals transmitted or of the pulse constituting an envelope of the signal transmitted by the interfering instrument.

5. Device according to any one of claims 1 to 4, **characterised in that** it comprises means able to desensitise at least two pieces of equipment subject to interference against the transmission of electromagnetic signals transmitted in proximity thereto by at least one interfering instrument, or at least one piece of equipment subject to interference against the transmission of electromagnetic signals transmitted in proximity thereto by at least two interfering instruments.

6. Device according to claim 5, **characterised in that** it comprises means for distributing the pulses generated as a function of said distribution matrix.

7. Device according to any one of claims 1 to 6, **characterised in that** it comprises means for the acquisition of the direction of each transmission of said interfering instrument that has a variable direction of transmission and means for programming the length of said pulse and delay thereof or lengthening thereof when said interfering instrument is transmitting an envelope pulse, as a function of the direction of transmission of the interfering instrument.

8. Device according to any one of claims 1 to 6, **characterised in that** it comprises means for acquiring the elevation and relative bearing of the electromagnetic transmission or data allowing these values to be determined.

9. Device according to any one of claims 1 to 8, **characterised in that** the device, the piece or pieces of equipment subject to interference and the interfering instrument or instruments are placed on a ship and the device comprises means for acquiring the ship's direction of transmission azimuth and course.

10. Method of desensitising at least one piece of equipment subject to interference against the transmission of electromagnetic signals transmitted in proximity thereto by at least one interfering instrument, knowing the moment when each transmission signal is transmitted, **characterised in that** it comprises the following stages:
a) constitution, during a test phase, of a distribution matrix including, for each operating mode of each of the interfering instruments, the values of the length of said pulse and delay thereof or lengthening thereof when each interfering instrument is transmitting an envelope pulse, the constitution stage comprising the following stages:
- putting each transmitting interfering instrument successively into these different transmission modes;
- evaluating the perception of each transmission by each piece of equipment subject to interference;
- programming the values of the length of said pulse and delay thereof or lengthening thereof in order to eliminate reception fully or in part during the length of the pulse and to allow all influence of the transmission of an interfering instrument on the reception of a piece of equipment subject to interference to be annihilated; and
- storing the values of the length of said pulse and delay thereof or lengthening thereof for each interfering instrument/piece of equipment subject to interference pair,
b) pre-determining a length and a delay using adjusting or programming means, when the interfering instrument is transmitting an envelope pulse, and
c) applying a desensitisation signal to said equipment subject to interference during which reception is eliminated in part or fully, said desensitisation signal length being different from that of the transmission electromagnetic signal.

11. Method according to claim 10, **characterised in that** said desensitisation signal length is a function of the direction of transmission of the given interfering instrument adapted so as to transmit successively in several directions.

## Patentansprüche

1. Vorrichtung zur Desensibilisierung mindestens eines gestörten Gerätes gegen die Ausstrahlung elektromagnetischer Signale, die in dessen Nähe von mindestens einem störenden Gerät ausgesandt werden, wobei die Vorrichtung umfasst:
- Mittel (13, 14, 15, 22) zur Erlangung von Informationen über die elektromagnetischen Signale, die vom genannten störenden Gerät ausgesandt werden,
- Mittel (13, 22) zur Verarbeitung dieser elektromagnetischen Signale, die vom genannten störenden Gerät ausgesandt werden,
- Mittel (23) zur Erzeugung eines Signals zur Desensibilisierung des gestörten Gerätes vom Typ Rechteckimpuls, **dadurch** gekenneichnet, dass sie aufweisen:
a) Mittel zur Erstellung einer Verteilungsmatrix während einer Versuchsphase, die für jede Betriebsart jedes der störenden Geräte die Werte der Dauer des genannten Rechteckimpulses aufweist und seiner Verzögerung oder seiner Verlängerung, wenn jedes störende Gerät einen Hüll-Rechteckimpuls aussendet, wobei die Erstellungsmittel umfassen:
- Mittel zur Veranlassung jedes störenden Gerätes nacheinander zur Ausstrahlung in seinen verschiedenen Betriebsarten;
- Mittel zur Abschätzung des Empfangs jeder Ausstrahlung durch jedes gestörte Gerät,
- Mittel zur Progammierung der Werte der Dauer des genannten Rechteckimpulses und seiner Verzögerung oder seiner Verlängerung, um vollständig oder teilweise den Empfang während der Dauer des Rechteckimpulses zu unterdrücken und um zu erlauben, jeden Einfluss der Ausstrahlung eines störenden Gerätes auf den Empfang eines gestörten Gerätes aufzuheben; und
- Mittel zur Speicherung der Werte der Dauer des genannten Rechteckimpulses und seiner Verzögerung oder seiner Verlängerung für jedes Paar aus störendem und gestörtem Gerät,
b) Mittel (7, 8, 13, 14, 15) zur Einstellung oder Programmierung der Dauer des genannten Rechteckimpulses und seiner Verzögerung oder seiner Verlängerung, wenn das genannte störende Gerät einen Hüll-Rechteckimpuls ausstrahlt; und
c) Mittel zum Anlegen dieses Desensibilisierungssignals vom Typ Rechteckimpuls an das genannte gestörte Gerät zu dessen Desensibilisierung.

2. Vorrichtung nach Patentanspruch 1, **dadurch gekennzeichnet, dass** sie Mittel zur Erfassung eines Synchronisationssignals der ausgesandten elektromagnetischen Signale oder eines Rechteckimpulses aufweist, der eine Hülle des elektromagnetischen Signals darstellt, das das störende Gerät ausstrahlt.

3. Vorrichtung nach irgendeinem der Patentansprüche 1 und 2, **dadurch gekennzeichnet, dass** sie Mittel zur Erfassung eines Verhaltenssignals des störenden Gerätes aufweist, wobei dieses Signal mindestens eine der folgenden Informationen darstellt:
- die Breite des vom störenden Gerät ausgestrahlten elektromagnetischen Impulses für ausgesandte elektromagnetische Signale, ein Synchronisationssignal umfassend, das die Erzeugung eines elektromagnetischen Impulses durch das störende Gerät umfasst,
- die vom störenden Gerät kommende Abgabe, wobei die Abgabe bedeutet, dass das störende Gerät ein elektromagnetisches Signal aussendet,
- die vom störenden Gerät kommende Ruhe, wobei die Ruhe bedeutet, dass das störende Gerät kein elektromagnetisches Signal ausstrahlt, und
- die Arbeit des störenden Gerätes unter verringerter oder nicht verringerter Leistung.

4. Vorrichtung nach Patentanspruch 2 und Patentanspruch 3, **dadurch gekennzeichnet, dass** sie Mittel zur Erzeugung eines Desensibilisierungs-Rechteckimpulses aufweist, dessen Dauer und Verzögerung vom genannten Verhaltenssignal und vom Synchronisationssignal der ausgestrahlten Signale abhängig ist oder vom Rechteckimpuls, der eine Hülle des vom störenden Gerät ausgestrahlten Signals darstellt.

5. Vorrichtung nach irgendeinem der Patentansprüche 1 bis 4, **dadurch gekennzeichnet, dass** sie Mittel aufweist, die in der Lage sind, mindestens zwei gestörte Geräte gegen die Ausstrahlung elektromagnetischer Signale zu desensibilisieren, die in seiner Nähe von mindestens einem störenden Gerät ausgesandt werden, oder mindestens ein gestörtes Gerät gegen die Ausstrahlung elektromagnetischer Signale, die in seiner Nähe von mindestens zwei störenden Geräten ausgestrahlt werden.

6. Vorrichtung nach Patentanspruch 5, **dadurch gekennzeichnet, dass** sie Mittel zur Verteilung der erzeugten Rechteckimpulse in Abhängigkeit von der genannten Verteilungsmatrix aufweisen.

7. Vorrichtung nach irgendeinem der Patentansprüche 1 bis 6, **dadurch gekennzeichnet, dass** sie Mittel zur Erfassung der Richtung jeder Ausstrahlung des genannten störenden Gerätes aufweisen, das eine veränderliche Ausstrahlungsrichtung aufweist, und Mittel zur Programmierung der Dauer des genannten Rechteckimpulses und seiner Verzögerung oder seiner Verlängerung, wenn das genannte störende Gerät einen Hüllrechteckimpuls aussendet, in Abhängigkeit von der Ausstrahlungsrichtung des störenden Gerätes.

8. Vorrichtung nach irgendeinem der Patentansprüche 1 bis 6, **dadurch gekennzeichnet, dass** sie Mittel zur Erfassung der Elevation und der Peilung der elektromagnetischen Ausstrahlung aufweist oder von Daten, die die Bestimmung dieser Werte erlauben.

9. Vorrichtung nach irgendeinem der Patentansprüche 1 bis 8, **dadurch gekennzeichnet, dass** sich die Vorrichtung, das oder die gestörten(n) Gerät(e) und das oder die störende(n) Gerät(e) auf einem Schiff befinden und die Vorrichtung Mittel zur Erfassung des Azimuts der Ausstrahlungsrichtung und des Kurses des Schiffes aufweist.

10. Verfahren zur Desensibilisierung mindestens eines gestörten Gerätes gegen die Ausstrahlung elektromagnetischer Signale, die in dessen Nähe von mindestens einem störenden Gerät ausgestrahlt werden, in Kenntnis des Zeitpunktes, zu dem jedes Sendesignal ausgesandt wird, **dadurch gekennzeichnet, dass** es die folgenden Schritte umfasst:
a) Erstellung einer Verteilungsmatrix während einer Versuchsphase, die für jede Betriebsart jedes der störenden Geräte die Werte der Dauer des genannten Rechteckimpulses aufweist und seiner Verzögerung oder seiner Verlängerung, wenn jedes störende Gerät einen Hüll-Rechteckimpuls aussendet, wobei der Erstellungsschritt die folgenden Schritte umfasst:
- Veranlassung jedes störenden Gerätes nacheinander zur Ausstrahlung in seinen verschiedenen Betriebsarten;
- Einschätzung des Empfangs jeder Sendung durch jedes gestörte Gerät,
- Programmierung der Werte der Dauer des genannten Rechteckimpulses und seiner Verzögerung oder seiner Verlängerung, um vollständig oder teilweise den Empfang während der Dauer des Rechteckimpulses zu unterdrücken und um zu erlauben, jeden Einfluss der Ausstrahlung eines störenden Gerätes auf den Empfang eines gestörten Gerätes aufzuheben; und
- Speicherung der Werte der Dauer des genannten Rechteckimpulses und seiner Verzögerung oder seiner Verlängerung für jedes Paar aus störendem und gestörtem Gerät,
b) vorherige Bestimmung einer Dauer und einer Verzögerung durch Mittel zur Einstellung oder Programmierung, wenn das störende Gerät einen Hüll-Rechteckimpuls ausstrahlt; und
c) Anlegen eines Desensibilisierungssignals an das genannte gestörte Gerät, während dessen der Empfang teilweise oder vollständig unterbunden wird, wobei die genannte Dauer des Desensibilisierungssignals sich von der des elektromagnetischen Sendesignals unterscheidet.

11. Verfahren nach Patentanspruch 10, **dadurch gekennzeichnet, dass** die genannte Dauer des Desensibilisierungssignals Funktion der Ausstrahlungsrichtung des störenden Gerätes ist, das dafür ausgelegt ist, nacheinander in mehrere Richtungen auszustrahlen.
